# EUROPEAN PATENT SPECIFICATION

(11) **EP 0 929 860 B1**
(45) Date of publication and mention of the grant of the patent: **05.12.2001**
(21) Application number: 97944572.3
(22) Date of filing: 29.09.1997
(51) Int. Cl.: G06F 3/06

(54) **METHOD AND APPARATUS FOR READING DATA FROM A STORAGE DEVICE**
VERFAHREN UND VORRICHTUNG ZUM LESEN VON DATEN AUF EINER SPEICHEREINRICHTUNG
PROCEDE ET APPAREIL SERVANT A LIRE DES DONNEES A PARTIR D'UN DISPOSITIF DE MEMOIRE

(30) Priority: 30.09.1996 US 723294
(43) Date of publication of application: 21.07.1999
(73) Proprietor: Symbios, Inc., Fort Collins, Colorado 80525 (US)
(72) Inventor: ELLIS, Jackson, L., Fort Collins, CO 80525 (US); BORN, Richard, M., Fort Collins, CO 80525 (US); MURESAN, Matthew, C., Fort Collins, CO 80525 (US); NOELDNER, David, R., Fort Collins, CO 80526 (US); HALL, Larry, H., Fort Collins, CO 80521 (US); WESTON-LEWIS, Graeme, M., Fort Collins, CO 80525 (US)
(74) Representative: Gill, David Alan
(86) International application number: US9717556
(87) International publication number: WO9814862

(56) References cited:
- US-A- 5 504 868
- PATENT ABSTRACTS OF JAPAN vol. 018, no. 327 (P-1757), 21 June 1994 & JP 06 075710 A (HITACHI LTD;OTHERS: 01), 18 March 1994,

## Description

### 1. Technical Field

The present invention relates generally to an improved data processing system and in particular to an improved method and apparatus for accessing data in a storage device. Still more particularly, the present invention relates to an improved method and apparatus for reading data from a storage device.

### 2. Description of the Related Art

Personal computers are becoming even more powerful, reaching levels where they are displacing minicomputers and even mainframe computers. In the process of downsizing, however, connectivity between and/or among personal computers and peripheral devices has evolved as a critical issue. Thus it has become increasingly important to be able to share peripheral devices such as hard drives, printers, scanners, or CD-ROM changers between multiple personal computers, or to be able to attach several peripherals to a single personal computer.

One means for achieving such connectivity is through the use of the small computer system interface ("SCSI" or commonly called the "SCSI bus") is a popular device independent parallel bus. The SCSI bus can, for example, be used to connect multiple devices including hard disk drives, printers and other input/output peripheral devices to a host computer.

Various versions of the SCSI standard have been proposed, approved, and/or adopted, including SCSI-1, SCSI-2, and SCSI-3. As used herein, the acronym "SCSI" is used to refer to any of these standards, although the SCSI-3 standard has been selected as exemplary for the purposes of describing the invention. Specifications for these standards may be obtained from the American National Standards Institute, New York, New York, as document numbers X3.131-1986 (SCSI-1), X3.131-1994 (SCSI-2), and X3.253-1995 (approved SCSI-3), which are incorporated by rëference.

The SCSI standard provides specifications for mechanical, electrical, and functional characteristics of the bus, including definitions of the physical characteristics of the bus conductors, the electrical characteristics of the signals that the conductors carry, and the meanings of those signals (e.g., control or data).

Devices interconnected by a SCSI bus are daisy-chained together using a common 50-conductor cable. The cable comprises nine data conductors (eight for data and one for parity), nine control conductors, and other power and ground conductors. Optionally, a 68-conductor cable may be used to allow wider information transfers (data only) of 16 bits. Typically each conductor is resistively coupled to a voltage of an inactive state. To "assert" a signal onto a conductor, a device must drive the conductor to a voltage of an active state against the resistive coupling of the conductor. If not driven, a conductor will return to its inactive state.

Communication over the SCSI bus is allowed between only two devices at any given time, although up to sixteen devices may be interconnected by the same bus. When two devices communicate on the bus, one acts as an "initiator" and the other acts as a "target." Initiator devices cause target devices on the bus to perform commands whereas target devices perform commands for the initiators. There can be multiple initiators and multiple targets on a SCSI bus. The initiator originates an operation (i.e., requests an I/O process to be performed) and the target performs the operation. Transfers on a SCSI bus are typically synchronous (although an asynchronous option is defined) and follow a "handshaking" protocol involving the exchange of a "Request" signal from a target and an "Acknowledge" signal from an initiator. This exchange takes place on conductors of the bus that are specifically dedicated to the handshaking task, and is performed in connection with each individual information transfer operation on the SCSI bus.

At a higher logical level, the SCSI standard defines a protocol for managing data transfers on the bus. The protocol comprises various phases, beginning with the SCSI bus in a "bus free phase" in which the SCSI bus is idle. To initiate a data transfer process, the initiator causes the bus to enter an "arbitration bus phase." During the arbitration bus phase, each initiator arbitrates for the bus with the other initiators by asserting the appropriate SCSI bus conductor corresponding with a SCSI identifier (SCSI ID) unique to that specific initiator. Because each SCSI ID has an assigned priority, the initiator with the highest priority will win control of the bus. After winning control of the bus through arbitration, the initiator with the highest priority selects the target device of interest in a "selection bus phase." The initiator controlling the bus asserts its SCSI ID as well as the SCSI ID of the target onto the conductors of the SCSI bus. The target detects its SCSI ID on the bus conductors and responds. In a subsequent "command bus phase," the target requests a SCSI command from the initiator in control of the bus.

At still a higher logical level, the SCSI standard defines a command and status structure. Commands are used by an initiator to request a target to perform particular operations. Each SCSI command, called a SCSI command descriptor block (CDB), consists of multiple bytes, either six, ten, twelve, or sixteen bytes. Each CDB contains a series of information, which describes various addresses, control bits, and functional bits used to perform various operations. For example, a CDB contains a SCSI operation code indicating the type of operation to be performed, such as the number of blocks or bytes transferred upon execution of the command. If the command is a write command, the CDB also includes a logical block address of the first block to be transferred as well as the number of blocks to be transferred during the execution of the write command. At the completion of a command, or if for some reason a command cannot be completed by the target, the target sends a status byte to the initiator to inform the initiator of its condition.

The specification of the SCSI standard thus combine to define an interface having multiple protocol levels. The defined interface provides computer systems with device independence within a class of devices. For example, a variety of mass storage devices (such as disk drives, tape drives, optical drives, and memory caches), printers, microprocessors, and other devices may be added to a computer system without requiring modifications to system hardware or software. In addition, special features and functions of individual devices can be handled; through the use of device-dependent fields and codes in the command structure.

This performance requirement has lead to great advances in both disk drives themselves and the architecture of the disk subsystem. Disk storage size has increased, access times have decreased and data transfer rates have increased. However, as more downsizing occurs and larger numbers of workstations are connected to the LAN, there is still continual pressure on improving disk subsystem performance.

In reading data from a storage device, presently available disk controller interfaces typically automatically receive a read command descriptor block (CDB) and provide an interrupt to the firmware (the microprocessor) to intervene and decode the CDB. The firmware then sets up the local DMA and buffer segmentation context to perform the read transfer. The firmware overhead is directly included in the command response time for the storage device and can delay the buffer being ready in time to prevent the disk from taking an extra revolution.

US-A-5504868 and the document PATENTS ABSTRACTS OF JAPAN vol. 018, no. 327(P1757), 21.06.1994 corresponding to JP 06075710 both disclose systems and methods for the accessing of data from a storage device and which both suggest the pre-fetching of data which has not yet been requested in order to speed-up access to the storage media.

In view of the continuing pressure on improving disk performance, it would be advantageous to have an improved method and apparatus for reading data from the storage device.

According to the present invention there is provided a method for reading data from a storage device comprising:
receiving a first read request to read a first set of data from the storage device;
retrieving the first set of data and additional data contiguous to the first set of data from the storage device, storing the first set of data and the additional data in a memory and providing a logical block address on completion of the first read request;
receiving a second read request to read a second set of data from the storage device, wherein the second read request includes a logical block address;
comparing the logical block address after a completion of the first read request with the logical block address for the second read request; and
reading the additional data from the memory in response to a determination that at least a portion of the second set of data is located in the memory, wherein a portion of the additional data is skipped before beginning the second read request.

### 4. Brief Description of the Drawings

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:

**Figure 1** depicts a data processing system **100** according to the present invention.

**Figure 2** is a block diagram of a computer system **200.**

**Figure 3** depicts a simplified block diagram of SCSI bus configuration in accordance with a preferred embodiment of the present invention.

**Figure 4** is a block diagram of a DMA engine including active context registers and inactive context registers according to the present invention.

**Figure 5** depicts a block diagram of selected components from SCSI interface **261** and DMA engine **262** according to the present invention.

**Figure 6** is a flowchart of a process for performing a coalesced read with a skip depicted in accordance with a preferred embodiment of the present invention.

### 5. Detailed Description of the Preferred Embodiment

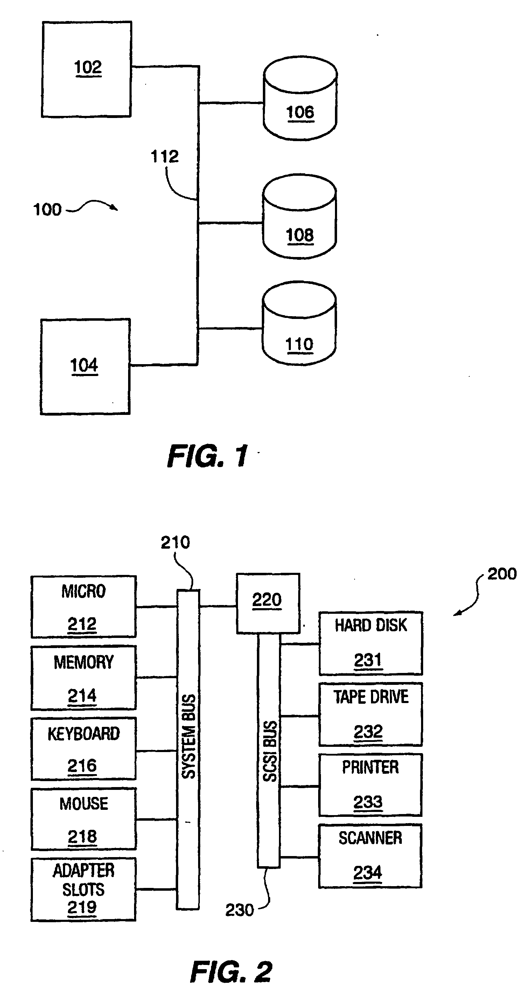

With reference now to the figures, and in particular with reference to **Figure 1,** a data processing system **100** is depicted according to the present invention. Data processing system **100** includes computer systems **102** and **104** connected to subsystems **106, 108,** and **110.** These subsystems are disk drive subsystems in the depicted example. Computer systems **102** and **104** are connected to subsystems **106, 108,** and **110** by bus **112.** According to the present invention, bus **112** may be implemented using a number of different bus architectures, such as a small computer system interface bus.

Referring to **Figure 2,** an alternative embodiment of a data processing system in which a preferred embodiment of the present invention may be implemented is illustrated. Data processing -system **200** includes a system bus **210** connecting microprocessor **212,** memory **214,** keyboard **216,** a pointing device such as mouse **218,** adapter slots **219,** and other system components not shown. Adapter slots **219** may optionally be used to connect data processing system **200** to an external SCSI bus linking multiple computer systems and/or peripherals as depicted in **Figure 1.**

Referring back to **Figure 2,** also connected to system bus **210** through SCSI adapter **220** is SCSI bus **230.** SCSI bus **230** may, in turn, be removably connected to up to seven additional peripherals such as hard disk **231,** backup tape drive **232,** printer **233,** scanner **234,** and other input/output peripheral devices. Those skilled in the art will recognize that any number of configurations of data processing systems which utilize a SCSI bus are possible.

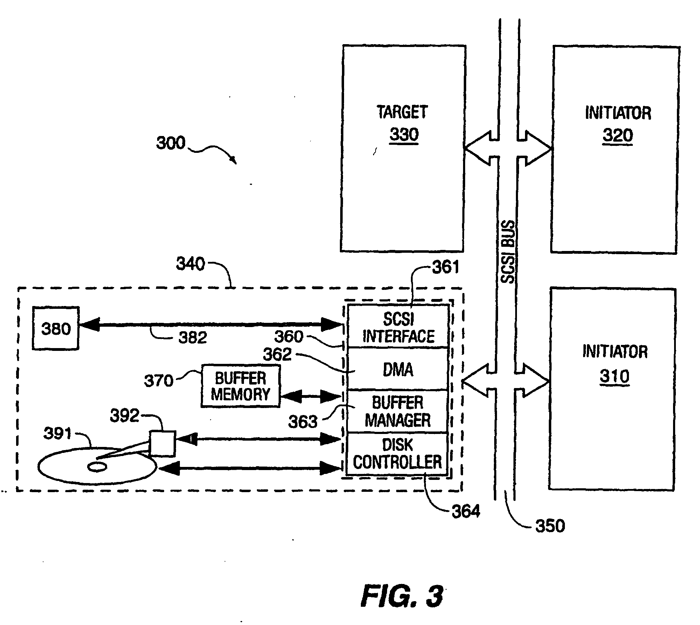

Referring to **Figure 3,** a simplified block diagram of a SCSI bus configuration is illustrated in accordance with a preferred embodiment of the present invention. The SCSI bus configuration **300** includes both initiator devices **310** and **320** as well as target devices **330** and **340** coupled to a SCSI bus **350.** In the depicted example, target device **340** is a hard disk computer peripheral device including a controller **360,** a buffer memory **370,** a microprocessor **380,** a hard disk **391,** and a hard disk servo **392.** Controller **360** includes functional blocks such as SCSI interface portion **361,** DMA engine **362,** buffer manager **363,** and disk controller **364** in accordance with a preferred embodiment of the present invention. These functional blocks, as well as others not shown, may be implemented in a number of different ways depending on the particular application. Controller **360** includes interfaces to buffer memory **370,** microprocessor **380,** a read/write interface to hard disk **392,** and hard disk servo **392.** Microprocessor interface **382** is connected to and controls the functional blocks depicted as SCSI interface **361,** DMA engine **362,** buffer manager **363,** and disk controller **364.**

In accordance with a preferred embodiment of the present invention, controller **360** is implemented as an application specific integrated circuit (ASIC). SCSI interface **361** in controller **360** operates as a target when selected by an initiator on the SCSI bus. As a target, SCSI interface **361** controls all phase transitions, disconnects, and reconnects for processing a command.

DMA engine **362** is configured to handle concurrent data transfers using a segmented buffer space in buffer memory **370.** Each data transfer can complete a data transfer, manage multiple disconnects/reconnect sequences, and send status without requiring intervention or interaction from microprocessor **380** during the data transfer. DMA engine **362** accomplishes this by receiving programming for each concurrent data transfer in a separate "context". Each context contains all the counters and configuration information for a particular transfer.

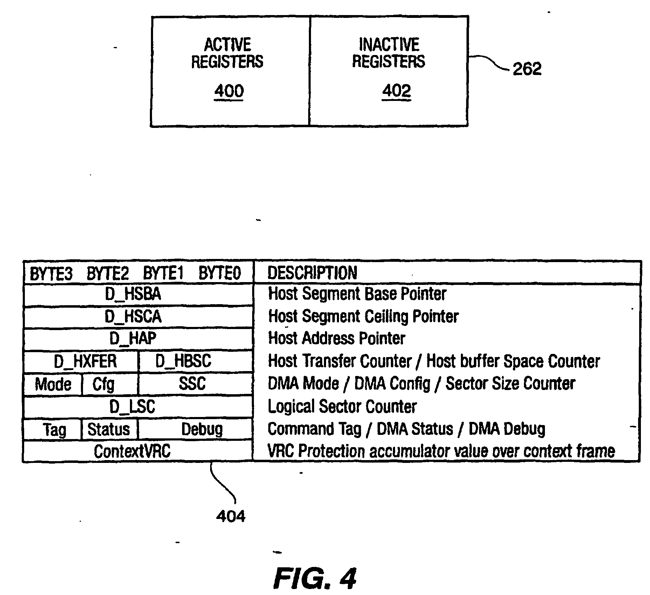

In accordance with a preferred embodiment of the present invention, DMA engine **362** includes active context registers **400** and inactive context registers **402** as illustrated in **Figure 4.** Information in context frame **404** is stored in active context registers **400** and inactive context registers **402.** The active context is the context currently used for transferring data while the inactive context provides a mechanism for quick context swaps between active and inactive contexts. Inactive context registers **402** may be accessed by both hardware within controller **360** and microprocessor **380** while active context registers **400** may be accessed only by hardware within controller **360.**

Additionally, each context has storage assigned to it in buffer **370** where context. information is stored as a context frame can be stored when not in DMA engine **352** in controller **360.**

Referring back to **Figure 4,** each context frame **404** contains a host segment base pointer, a host segment ceiling pointer, and a host address pointer. The host segment base pointer and the host segment ceiling pointer point to the beginning and end of the buffer segment. When the host address pointer increments to the host segment ceiling pointer, the host address pointer moves back to the host segment base pointer.

The host address pointer is used to point to buffer addresses as they are accessed. The host transfer counter is a counter that is initialized with the number of sectors to be transferred across the DMA interface for given disk read or disk write command. The host buffer space counter is loaded with the number of field sectors available in the buffer segment for disk read operations or the number of sectors available in the buffer segment for disk write operations. The counter is decremented each time data is accessed. The DMA mode includes various information about the DMA, such as when the DMA can begin a process. Other information such as whether a read or write is to occur is found in this section. DMA configuration information also is found in the context frame information such as whether CRC checking and interrupts are set in this section. The sector size counter is used to send data on byte based transfers. The logical sector counter is loaded with the logical sector address of the first sector to be transferred. The command tag register is initialized by microprocessor **380** with the value of the tag field in the SCSI command. This tag is signed by the initiator and is unique among all tags currently active from that initiator on this target. The status field is employed to set alerts or initiate the sending of messages upon various actions, such as the pausing of a data access due to availability of the data or to indicate that a transfer has been finished or aborted. The DMA debug field contains information for debugging purposes, such as the amount of data to transfer after the detection of a CRC or parity error. The context VRC field is checked while a context is loaded from the buffer.

Buffer manager **363** manages the transfer of data between buffer memory **370** and DMA engine **362.** Additionally, buffer manager **363** manages the transfer of data between buffer memory **370** and disk controller **264.** Disk controller **264** provides for the reading and writing of data buffer memory **370** to and from hard disk **391.** Disk controller **364** will identify the physical addresses required to write data from LBAs.

According to the present invention, a read CDB is received and the DMA is automatically set up to begin the transfer of read data from the buffer memory only if the logical block address (LBA) matches a LBA range of LBAs in buffer memory. The read does not occur if the LBA is not within a range of LBAs already in buffer memory. In such a case, the microprocessor sets up the local DMA and buffer segmentation context to perform the read transfer. By setting up the DMA transfer to read data from the current buffer segmentation, a "coalesced" read occurs, which is a merger of two host commands into a single read disk command. In other words, two read commands can be performed as a single disk command.

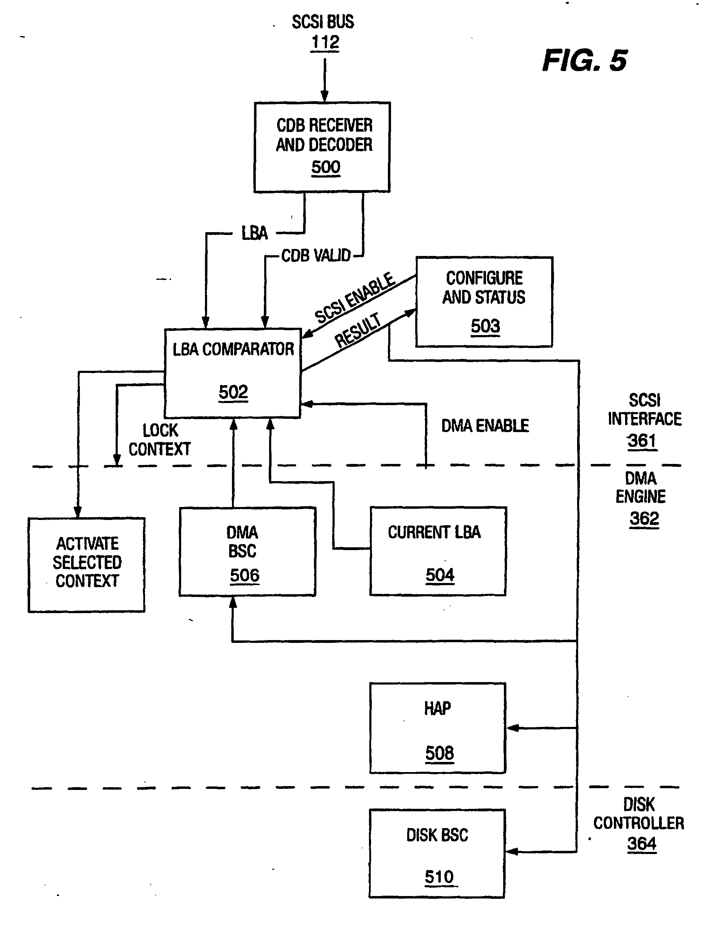

With reference now to **Figure 5,** a block diagram of selected components from SCSI interface **261** and DMA engine **262** are illustrated according to the present invention. SCSI interface **261** includes CDB receiver and decoder **500,** which receives CDBs from SCSI bus **112.** LBA comparator **502** is enabled by signal enable if CDB is a valid command. LBA comparitor **502** also may be enabled or disabled by configuration and status block **503.** A SCSI enable signal is sent to LBA comparitor **502** to enable the comparison function. In this manner, SCSI interface **361** through configuration and status block **503** may enable or disable this function. Additionally, a similar function is provided for DMA engine **362** through a signal called DMA enable. When enabled, the comparison is automatically performed without intervention from microprocessor **380.** Information from a received CDB are sent to LBA comparator **502,** which subtracts the current LBA from current LBA register **504** in DMA engine **262** from the new LBA obtained from the received CDB at CDB receiver and decoder **500.** LBA comparitor **502** sends a lock context signal to prevent a switching of context between inactive context register **402** and active context register **400.** This is employed to prevent a switching of context information during a LBA comparison. The result of the LBA comparison is compared to a value from DMA buffer space counter (BSC) **506**. If the result is less than the buffer space counter value, the LBA comparator then decrements the value in DMA BSC register **506** by the result and increments the host address pointer (HAP) register **508** by the result times the size of a block. In addition, disk BSC register **510** in disk controller **364** also is decremented by the result. Decrementing both DMA BSC register **506** and disk BSC register **510** are performed to adjust for skipped sectors in reading data. In particular, this adjustment indicates that sectors have been freed up. Thereafter, LBA comparitor **502** sends a signal to activate the selected context in active context registers **400.**

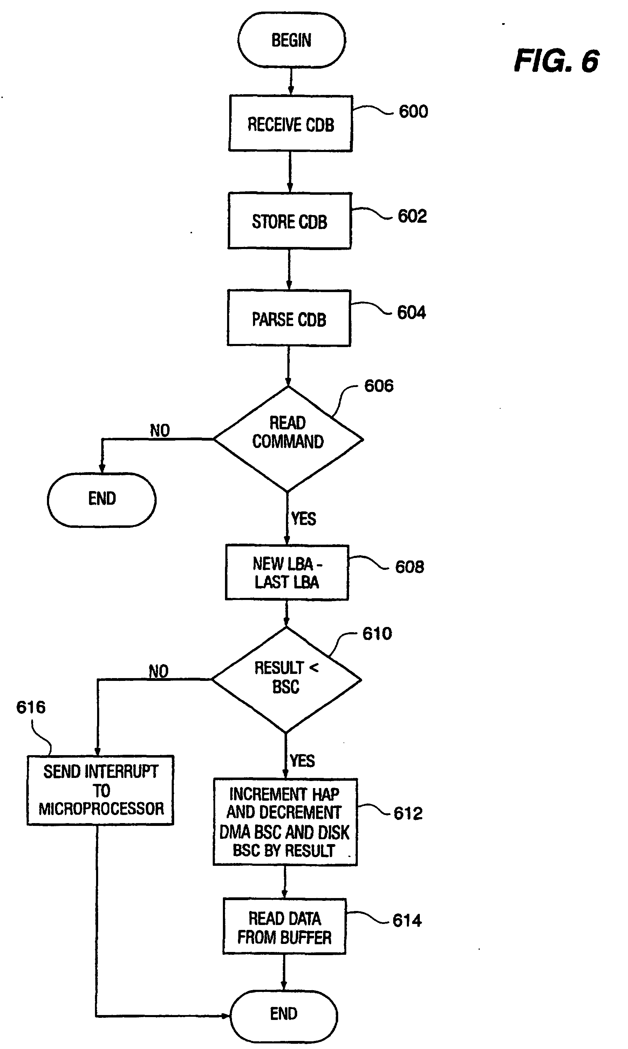

With reference now to **Figure 6,** a flowchart of a process for performing a coalesced read with a skip is depicted in accordance with a preferred embodiment of the present invention. When a first read occurs, disk controller **364** is set to read ahead of what the first read command has requested to obtain additional data from the disk. All of this information is stored in buffer memory **370,** which allows for a coalesced read. The process begins by receiving a CDB (step **600**). Thereafter, the process stores the CDB **602** and parses the CDB to determine the type of command (step **604**). A determination is then made as to whether the CDB contains a read command (step **606**). If the CDB does not contain a read command, the process terminates. Otherwise, the last LBA is subtracted from the new LBA (step **608**). Thereafter, a determination is made as to whether the result occurring from subtracting the last LBA after the last data has been read from buffer memory **370** from the new LBA is less than the value of the buffer space counter (BSC) (step **610**). The BSC indicates data in buffer memory **370** not read by the prior read command. If the result is less than the value of the buffer space counter, the process increments the HAP by the result times the block size and decrements the DMA BSC **506** and disk BSC **510** by the result (step **612**). This step is the step in which the skip is set up for reading data. Thereafter, the data is read from the buffer (step **614**) with the process terminating thereafter. With reference again to step **610,** if the result is equal to or greater than the BSC, the process sends an interrupt to the microprocessor to stop the read (step **616**) with the process terminating thereafter.

Although the depicted example employs a comparison of LBAs to determine whether the coalesced read requests, other factors may be used to determine whether the read requests may be coalesced or read from the same buffer segment. For example, the transfer length of each read request may be used to determine whether the two read requests can be combined as a single read operation.

## Claims

1. A method for reading data from a storage device comprising:
receiving a first read request to read a first set of data from the storage device;
retrieving the first set of data and additional data contiguous to the first set of data from the storage device, storing the first set of data and the additional data in a memory and providing a logical block address on completion of the first read request;
receiving a second read request to read a second set of data from the storage device, wherein the second read request includes a logical block address;
comparing the logical block address after a completion of the first read request with the logical block address for the second read request; and
reading the additional data from the memory in response to a determination that at least a portion of the second set of data is located in the memory, wherein a portion of the additional data is skipped before beginning the second read request.

2. The method of claim 1, wherein the step of comparing the logical block address after a completion of the first read request to the logical block address for the second request includes subtracting the final logical block address from the logical block address of the second read request.

3. The method of claim 1, wherein the step of receiving a first read request to read a first set of data from the storage device further comprises:
receiving a read command descriptor block including a logical block address.

4. The method of claim 3, further comprising:
storing context information for the first read request in an active context register.

5. The method of claim 4, further comprising:
prior to comparing the logical block address after a completion of the first read request to the logical block address for the second read request, locking the active context register.

6. The method of claim 4, wherein the step of comparing the logical block address after a completion of the first read request to the logical block address for the second read request further comprises:
subtracting the logical block address for the second read request from the logical block address after a completion of the first read request to form a difference between the logical block address for the second read request and the logical block address after a completion of the first read request; and
comparing the difference between the logical block address for the second read request and the logical block address after a completion of the first read request to a buffer space counter.

7. The method of claim 6, further comprising:
responsive to determining that the difference between the logical block address for the second read request and the logical block address after a completion of the first read request is less than the buffer space counter, decrementing a value in the buffer space counter by the difference and incrementing a host address pointer by the difference times a block size.

## Patentansprüche

1. Verfahren zum Lesen von Daten aus einer Speichervorrichtung, umfassend die folgenden Schritte:
Empfangen einer ersten Leseanforderung zum Lesen eines ersten Satzes von Daten aus der Speichervorrichtung;
Zurückspeichern des ersten Satzes von Daten und von zusätzlichen Daten, die mit dem ersten Satz von Daten zusammenhängend sind, aus der Speichervorrichtung, Speichern des ersten Satzes von Daten und der zusätzlichen Daten in einem Speicher und Erzeugen einer logischen Blockadresse nach der Ausführung der ersten Leseanforderung;
Empfangen einer zweiten Leseanforderung zum Lesen eines zweiten Satzes von Daten aus der Speichervorrichtung, wobei die zweite Leseanforderung eine logische Blockadresse beinhaltet;
Vergleichen der logischen Blockadresse nach der Ausführung der ersten Leseanforderung mit der logischen Blockadresse für die zweite Leseanforderung; und
Lesen der zusätzlichen Daten aus dem Speicher in Reaktion auf eine Ermittlung, dass sich wenigstens ein Teil des zweiten Satzes von Daten in dem Speicher befindet, wobei ein Teil der zusätzlichen Daten vor Beginn der zweiten Leseanforderung übersprungen wird.

2. Verfahren nach Anspruch 1, bei dem der Schritt des Vergleichens der logischen Blockadresse nach der Ausführung der ersten Leseanforderung mit der logischen Blockadresse für die zweite Anforderung das Subtrahieren der letzten logischen Blockadresse von der logischen Blockadresse der zweiten Leseanforderung beinhaltet.

3. Verfahren nach Anspruch 1, bei dem der Schritt des Empfangens einer ersten Leseanforderung zum Lesen eines ersten Satzes von Daten aus der Speichervorrichtung ferner folgendes umfasst:
Empfangen eines Lesebefehl-Deskriptorblockes mit einer logischen Blockadresse.

4. Verfahren nach Anspruch 3, das ferner folgendes umfasst:
Speichern von Kontextinformationen für die erste Leseanforderung in einem aktiven Kontextregister.

5. Verfahren nach Anspruch 4, das ferner folgendes umfasst:
Sperren des aktiven Kontextregisters vor dem Vergleichen der logischen Blockadresse nach der Ausführung der ersten Leseanforderung mit der logischen Blockadresse für die zweite Leseanforderung.

6. Verfahren nach Anspruch 4, bei dem der Schritt des Vergleichens der logischen Blockadresse nach der Ausführung der ersten Leseanforderung mit der logischen Blockadresse für die zweite Leseanforderung ferner folgendes umfasst:
Subtrahieren der logischen Blockadresse für die zweite Leseanforderung von der logischen Blockadresse nach der Ausführung der ersten Leseanforderung zur Bildung einer Differenz zwischen der logischen Blockadresse für die zweite Leseanforderung und der logischen Blockadresse nach der Ausführung der ersten Leseanforderung; und
Vergleichen der Differenz zwischen der logischen Blockadresse für die zweite Leseanforderung und der logischen Blockadresse nach der Ausführung der ersten Leseanforderung an einen Pufferspeicherplatzzähler.

7. Verfahren nach Anspruch 6, ferner umfassend die folgenden Schritte:
in Reaktion auf die Ermittlung, dass die Differenz zwischen der logischen Blockadresse für die zweite Leseanforderung und der logischen Blockadresse nach der Ausführung der ersten Leseanforderung geringer ist als der Pufferspeicherplatzzähler, Dekrementieren eines Wertes in dem Pufferspeicherplatzzähler um die Differenz und Inkrementieren eines Host-Adresszählers um die Differenz multipliziert mit einer Blockgröße.

## Revendications

1. Méthode pour lire des données d'un dispositif de stockage comprenant :
recevoir une première requête de lecture pour lire un premier ensemble de données du dispositif de stockage;
extraire le premier ensemble de données et des données additionnelles continguës au premier ensemble de données du dispositif de stockage, stocker le premier ensemble de données et les données additionnelles dans une mémoire et fournir une adresse de bloc logique à l'achèvement de la première requête de lecture;
recevoir une deuxième requête de lecture pour lire un deuxième ensemble de données du dispositif de stockage, où la deuxième requête de lecture inclut une adresse de bloc logique;
comparer l'adresse de bloc logique après un achèvement de la première requête de lecture avec l'adresse de bloc logique pour la deuxième requête de lecture; et
lire les données additionnelles de la mémoire en réponse à une détermination selon laquelle au moins une partie du deuxième ensemble de données est située dans la mémoire, où une partie des données supplémentaires est sautée avant de commencer la deuxième requête de lecture.

2. Méthode de la revendication 1, dans laquelle l'étape consistant à comparer l'adresse de bloc logique après un achèvement de la première requête de lecture avec l'adresse de bloc logique pour la deuxième requête de lecture inclut soustraire l'adresse de bloc logique finale de l'adresse de bloc logique de la deuxième requête de lecture.

3. Méthode de la revendication 1, dans laquelle l'étape consistant à recevoir une première requête de lecture pour lire un premier ensemble de données du dispositif de stockage comprend en outre :
recevoir un bloc descripteur de commande de lecture incluant une adresse de bloc logique.

4. Méthode de la revendication 3, comprenant en outre :
stocker des informations de contexte pour la première requête de lecture dans un registre actif de contexte.

5. Méthode de la revendication 4, comprenant en outre :
avant de comparer l'adresse de bloc logique après un achèvement de la première requête de lecture à l'adresse de bloc logique pour la deuxième requête de lecture, verrouiller le registre actif de contexte.

6. Méthode de la revendication 4, dans laquelle l'étape consistant à comparer l'adresse de bloc logique après un achèvement de la première requête de lecture à l'adresse de bloc logique pour la deuxième requête de lecture comprend en outre :
soustraire l'adresse de bloc logique pour la deuxième requête de lecture de l'adresse de bloc logique après un achèvement de la première requête de lecture pour former une différence entre l'adresse de bloc logique pour la deuxième requête de lecture et l'adresse de bloc logique après un achèvement de la première requête de lecture; et
comparer la différence entre l'adresse de bloc logique pour la deuxième requête de lecture et l'adresse de bloc logique après un achèvement de la première requête de lecture avec un compteur d'espace tampon.

7. Méthode de la revendication 6, comprenant en outre :
en réponse à la détermination selon laquelle la différence entre l'adresse de bloc logique pour la deuxième requête de lecture et l'adresse de bloc logique après un achèvement de la première requête de lecture est moins que le compteur d'espace tampon, décrémenter une valeur dans le compteur d'espace tampon par la différence et incrémenter un pointeur d'adresse hôte par la différence multipliée par une taille de bloc.
